# EUROPÄISCHE PATENTANMELDUNG

(11) **EP 4 653 608 A1**
(43) Veröffentlichungstag der Anmeldung: **26.11.2025**
(21) Anmeldenummer: 25177861.9
(22) Anmeldetag: 21.05.2025
(51) Int. Cl.: D06P 1/52, D06P 5/08, C08F 212/08, C08F 220/06, C08F 8/44

(54) **POLYMER ZUR AUSRÜSTUNG VON AMINO- UND/ODER AMID-GRUPPEN HALTIGEN SUBSTRATEN**

(30) Priorität: 23.05.2024 EP 24177551
(71) Anmelder: Rudolf GmbH, 82538 Geretsried (DE)
(72) Erfinder: SIELEMANN, Dirk, 82538 Geretsried (DE); HAUSER, Christoph, 82538 Geretsried (DE); BRAUN, Rainer Wilhelm, 83670 Bad Heilbrunn (DE)
(74) Vertreter: Weickmann & Weickmann PartmbB

(57) **Zusammenfassung**

Die vorliegende Erfindung betrifft ein teilweise neutralisiertes Polymer, ein Verfahren zu dessen Herstellung sowie dessen Verwendung zur Ausrüstung von Substraten.

## Beschreibung

Die vorliegende Erfindung betrifft ein teilweise neutralisiertes Polymer, ein Verfahren zu dessen Herstellung sowie dessen Verwendung zur Ausrüstung von Substraten.

Gefärbte und bedruckte Textilien weisen oft eine unbefriedigende Farbechtheit auf. Unter "Farbechtheit" versteht man die Widerstandsfähigkeit der Färbung gegenüber äußeren Einflüssen wie Wasser, Licht oder Reibung. Dies ist insbesondere bei Färbungen mit anionischen Farbstoffen wie Säurefarbstoffen, vormetallisierten Farbstoffen oder Metallkomplexfarbstoffen und in geringerem Maße mit Reaktivfarbstoffen oder Reduktionsfarbstoffen der Fall.

Viele Substrate, die mit anionischen Farbstoffen gefärbt werden, enthalten Amino- oder Amidgruppen und sind synthetischen oder natürlichen Ursprungs wie z. B. Polyamide oder Polyamid-Gemische, Wolle, Seide, Lederimitate oder Leder.

Der anionische Farbstoff wird durch eine Ionenbindung auf dem Substrat gebunden. Diese ist jedoch relativ schwach und kann zu Echtheitsproblemen führen.

Um die Farbechtheit nach dem Färben zu gewährleisten, werden Mittel verwendet, die eine stabile Verankerung der Farbstoffmoleküle auf den Fasern ermöglichen und fördern und damit die Wahrscheinlichkeit eines Farbverlust während des Tragens oder Waschens verringern.

Farbechtheitsverbesserer sind schon lange bekannt. Sie bilden mit den Aminogruppen der Fasern ionische Bindungen aus und bilden eine Oberflächenschicht, wodurch die Diffusion des Farbstoffs aus der behandelten Faser verringert wird.

Bekannte Nachbehandlungsmittel sind z.B. sogenannte "Syntane", also Kondensationsprodukte von aromatischen Sulfonsäuren und Formaldehyd(derivaten). Das Wort "Syntan" ist eine Zusammensetzung aus "synthetisch" und "Tannin", da ursprünglich natürliche Tannine und/oder Brechweinstein als Nachbehandlungsmittel für anionisch färbbare Fasern verwendet wurden.

Als Farbechtheitsverbesserer werden außerdem sulfonierte Kondensationsprodukte aus Phenol, Naphthol, Bisphenol wie z. B. Bisphenol A oder Bisphenol S verwendet. WO 94/28231 beschreibt sulfonierte Naphthol- bzw. Phenol-Formaldehyd-Kondensationsprodukte als Nachbehandlungsmittel für Polyamide.

In US 5,574,106 A werden Acryl-Copolymere offenbart, die Nylon-Teppiche und andere Polyamid-Produkte imprägnieren und Ihnen Fleckschutz verleihen. Eine Wirksamkeit als Farbechtheitsverbesserer wird nicht offenbart.

Nachteil dieser Mittel ist, dass die behandelten Substrate durch die phenolischen Bestandteile infolge von UV-Licht, insbesondere Sonnenlicht, zur Vergilbung neigen.

Außerdem sind Phenole, Bisphenole oder Formaldehyd aufgrund ihrer Gesundheitsschädlichkeit und mangelnden Umweltfreundlichkeit als SVHC (substances of very high concern) gelistet und zunehmend unerwünscht.

Um diese Probleme zu umgehen, wird in der WO 95/30794 eine umweltfreundliche Zusammensetzung zur Verankerung von Farbstoffen vorgeschlagen. Durch diese wird das Problem des Vergilbens zwar gelöst, sie vermittelt jedoch eine ungenügende Wasch- und Schweißechtheit.

Aufgabe der vorliegenden Erfindung ist daher, die Nachteile des Standes der Technik zu überwinden.

Überraschenderweise wurde gefunden, dass durch das Polymer oder die Zusammensetzung der Erfindung der Farbstoff gut auf einem Substrat verankert werden kann und sich auch durch Schweiß, häufiges Waschen, Dämpfen, Bügeln und/oder mechanische Reibung nicht oder nur minimal ablöst oder entfärbt. Eine Verfärbung durch Licht- oder UV-Strahlung ist genauso wenig wie eine Vergilbung zu beobachten. Das Polymer oder die Zusammensetzung der Erfindung ist darüber hinaus frei von gesundheitlich bedenklichen Stoffen, wie z.B. Phenol, Bisphenol oder Formaldehyd. Die erfindungsgemäßen Zusammensetzungen zeigen gute Verlaufs- und Migrationseigenschaften, gute Lagerstabilität sowie gute Scherstabilität.

Ohne an eine Theorie gebunden zu sein, wird angenommen, dass die Farbstoffmoleküle durch das erfindungsgemäße Polymer im Wesentlichen mittels hydrophober und π-Wechselwirkungen der aromatischen Gruppen auf dem Substrat verankert werden.

In einem Aspekt ist die Erfindung gerichtet auf ein Polymer, umfassend die Wiederholungseinheiten 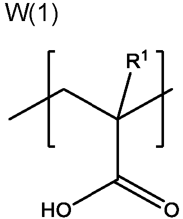 oder ein Salz davon, 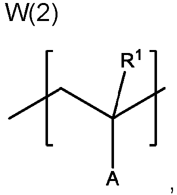 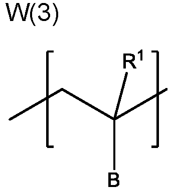 oder ein Salz davon, und ggf. W(4) 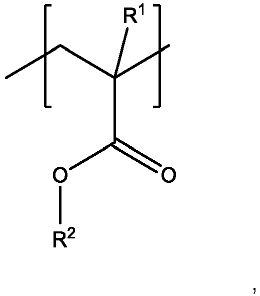 wobei
R¹ unabhängig voneinander -H, -Aryl oder -Alkyl, insbesondere -CH₃ oder -C₂H₅, bevorzugt H, ist;
R² unabhängig voneinander -C₂₋₈-Alkyl oder
- Aryl ggf. substituiert mit C₂₋₂₀-Alkyl oder C₂₋₂₀-Alkenyl, oder
-CH₂-CH₂-O-Aryl ggf. substituiert mit C₂₋₂₀-Alkyl oder C₂₋₂₀-Alkenyl, bevorzugt -Aryl ist;
A unabhängig voneinander eine Arylgruppe, insbesondere -Phenyl, - Tolyl, -Xylyl, oder -Naphtyl, besonders bevorzugt Phenyl, ist,
B unabhängig voneinander eine Arylgruppe, insbesondere -Phenyl, - Tolyl, -Xylyl, oder -Naphtyl, besonders bevorzugt Phenyl, ist, welche mit 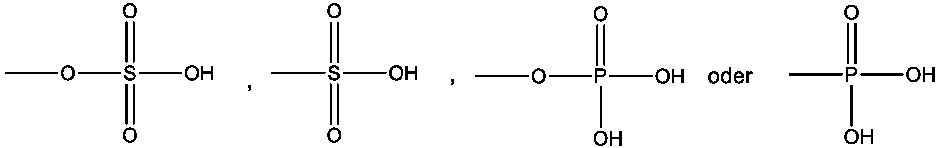 insbesondere mit 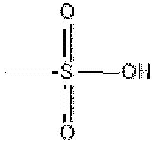 substituiert ist,
   wobei mindestens 75 mol-% der Wiederholungseinheiten W(1) und W(3) als mindestens monovalentes Salz, bevorzugt als Natriumsalz vorliegen.

Bevorzugt ist R¹ jeweils H.

A ist bevorzugt jeweils eine Phenylgruppe.

B ist bevorzugt jeweils eine Phenylgruppe, welche mit 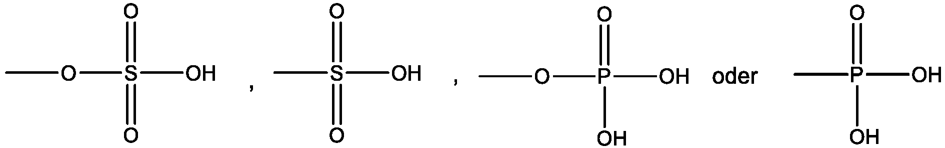 insbesondere mit 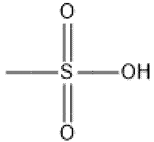 substituiert ist.

R² ist bevorzugt jeweils -Aryl oder -CH₂-CH₂-O-Aryl substituiert mit C₂₋₂₀-Alkyl oder C₂-₂₀-Alkenyl, stärker bevorzugt jeweils -Phenyl oder -CH₂-CH₂-O-Phenyl substituiert mit C₂₋₂₀-Alkyl oder C₂₋₂₀-Alkenyl.

In einer bevorzugten Ausführungsform ist R¹ in W(1), W(2), W(3) und W(4) jeweils -H, A ist jeweils -Phenyl und B ist jeweils substituiertes Phenyl, insbesondere Phenyl substituiert mit -SO₃H.

75 mol-%, bevorzugt 75-99,9 mol-% der Wiederholungseinheiten W(1) und W(3) liegen als mindestens monovalentes Salz, d.h. mindestens einfach deprotoniert vor, wobei die Summe aus W(1) und W(3) insgesamt 100 mol-% ergibt (W(1)+W(3)=100 mol-%).

Das monovalente Salz der Wiederholungseinheit W(1) ist ein Carboxylat-Salz. Monovalente Salze der Wiederholungseinheit W(3) sind z.B. Sulfate, Sulfonate, Hydrogenphosphate oder primäre Phosphonate. Bivalente Salze der Wiederholungseinheit W(3) sind z.B. Phosphate oder sekundäre Phosphonate. Die salzbildenden Kationen sind unabhängig voneinander bevorzugt Alkalimetallionen oder Erdalkalimetallionen, insbesondere Natriumionen.

Es hat sich überraschend gezeigt, dass im beanspruchten Bereich der Salzgruppen-Konzentration im Polymer eine hervorragende Substantivität erzielt werden kann. Ferner kann die Viskosität des Polymers in wässriger Lösung signifikant reduziert werden im Vergleich zu Polymeren, bei denen der Salzanteil unterhalb des beanspruchten Bereichs liegt.

Der vorteilhafte Effekt der Substantivität erzielt herausragende Farbechtheiten, und die reduzierte Viskosität erleichtert die Handhabung des Polymers in Form von Lösungen, insbesondere wässrigen Lösungen.

Bevorzugt enthält das Polymer 40-80 mol-%, stärker bevorzugt 40-70 mol-%, stärker bevorzugt 40-60 mol-% oder stärker bevorzugt 50-70 mol-%, Wiederholungseinheiten W(1), 5-50 mol-%, stärker bevorzugt 25-50 mol-%, oder stärker bevorzugt 10-40 mol-%, Wiederholungseinheiten W(2), 1-20 mol-%, stärker bevorzugt 5-20 mol-%, stärker bevorzugt 7-20 mol-% oder 1-10 mol-%, bevorzugt 1-8 mol-% Wiederholungseinheiten W(3) und 0-10 mol-%, bevorzugt 0-5 mol-%, Wiederholungseinheiten W(4) (mit W(1)+W(2)+W(3)+W(4)=100 mol-%).

Entsprechend liegt das molare Verhältnis W(1):W(2):W(3):W(4) bevorzugt bei 9-20:1-12:0,1-3:0-3, stärker bevorzugt bei 4-6:2,5-5:0,5-2:0-1.

Bevorzugt enthält das Polymer 35-70 mol-%, stärker bevorzugt 40-70 mol-%, noch stärker bevorzugt 50-70 mol-% Wiederholungseinheiten von W(2) und W(3) (W(2)+W(3)) bezogen auf alle Wiederholungseinheiten (W(1)+W(2)+W(3)+W(4)=100 mol-%).

Es hat sich gezeigt, dass die unpolaren Wiederholungseinheiten W(2) und W(3), welche jeweils eine Arylgruppe tragen, eine hervorragende Wechselwirkung mit den Farbstoffmolekülen eingehen und diese auf dem Substrat stabilisieren. Es wird vermutet, dass dieser Effekt auf π-π-Wechselwirkungen zurückzuführen ist.

Gleichzeitig kann die Dispergierbarkeit der Polymere in wässrigen Medien und ihre Wechselwirkung gegenüber polaren Substraten, wie z.B. amid- und/oder aminohaltigen Substraten durch die molaren Anteile der Wiederholungseinheiten W(1) und W(3) und deren Deprotonierungsgrad (≥75 mol-% Salzbildung) eingestellt werden, ohne die oben beschriebenen (gewünschten) unpolaren Wechselwirkungen zu konterkarieren. Die erfindungsgemäßen Polymere eignen sich daher überraschend für die unkomplizierte Ausrüstung von polaren Substraten in wässrigen Medien mit ausgezeichneten Echtheitsergebnissen.

In einer besonders bevorzugten Ausführungsform ist daher die Erfindung auf ein Polymer gerichtet, umfassend die Wiederholungseinheiten
- W(1) oder ein Salz davon,
- W(2),
- W(3) oder ein Salz davon, und
- ggf. W(4),

wobei mindestens 75 mol-% der Wiederholungseinheiten W(1) und W(3) als mindestens monovalentes Salz, bevorzugt als Natriumsalz vorliegen, und
wobei das Polymer 40-70 mol-% W(1), 25-50 mol-% W(2), 5-20 mol-% W(3) und 0-10 mol-% W(4) enthält, mit der Maßgabe dass das Polymer 35-70 mol-%, bevorzugt 40-70 mol-%, Wiederholungseinheiten von W(2) und W(3) (W(2)+W(3)) enthält.

Das Polymer der vorliegenden Erfindung ist bevorzugt wasserlöslich. Insbesondere ist das erfindungsgemäße Polymer zu 100-600 g/L, bevorzugt zu 200-300 g/L in destilliertem Wasser bei 20 °C vollständig löslich.

Bevorzugt beträgt der pH-Wert einer 30%-igen Lösung in destilliertem Wasser bei 20 °C 6-7, bevorzugt 6,2-6,5. Eine 30%i-ge Lösung in destilliertem Wasser bei 20 °C hat bevorzugt eine Viskosität von 50-1200 mPAs, bevorzugt 50-600 mPas, stärker bevorzugt 100-300 mPas gemessen gemäß DIN53019/ISO3219. Die niedrige Viskosität erleichtert eine leichte Verarbeitung und Pumpbarkeit. Die Wiederholungseinheiten W(1), W(2), W(3) und ggf. W(4) sind bevorzugt statistisch, alternierend oder in Blöcken in der Polymerkette angeordnet. Bevorzugt handelt es sich bei dem erfindungsgemäßen Polymer um ein statistisches Polymer.

Ein weiterer Aspekt der Erfindung ist ein Verfahren zur Herstellung des oben beschriebenen Polymers. Das Verfahren umfasst die Schritte
(a) Bereitstellen der Monomere 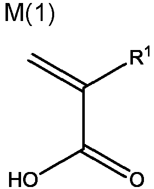 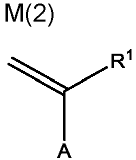 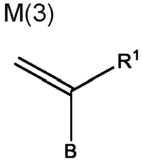 und ggf. M(4) 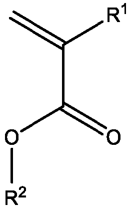 als Lösung oder Dispersion,
(b) Polymerisieren der nach Schritt (a) erhaltenen Mischung,
(c) Neutralisieren der nach Schritt (b) erhaltenen Mischung, so dass mindestens 75 mol-% der von den Monomeren M(1) und M(3) stammenden Wiederholungseinheiten W(1) und W(3) als mindestens monovalentes Salz vorliegen, und
(d) ggf. Destillieren der nach Schritt (c) erhaltenen Mischung.

R¹, R², A und B sind wie oben definiert.

Bevorzugte Beispiele für Monomer M(3) sind Natriumstyrolsulfonat oder Natriumvinyltoluolsulfonat.

Bevorzugte Beispiele für Monomer M(4) sind Ethyl(meth)acrylat, Butyl(meth)acrylat, Phenyl-, Benzyl-, Naphthyl(meth)acrylat und Cardanyl(meth)acrylat, bevorzugt Cardanyl(meth)acrylat.

In Schritt (a) werden die Monomere M(1), M(2), M(3) und ggf. M(4) bevorzugt zusammen mit Wasser und/oder organischen Lösungsmittel, z.B. C₂₋₈-Alkohol, wie z.B. Ethanol, Glycerin oder Isopropanol, Glykol, wie z.B. Butyldiglykol, Propylenglykol, Dipropylenglykol, Tripropylenglykol, Glykolester, Ester, wie z.B. Propylenglykolmonomethyletheracetat, Keton, wie z.B. Aceton, und/oder Polyalkylenglykol, insbesondere Polyethylenglykol wie PEG 100-600, bevorzugt PEG 200-300, und Propylenglykol, zu einer Lösung oder einer Dispersion vermengt. Die Lösung oder Dispersion kann durch dem Fachmann bekannte Methoden hergestellt werden und umfasst z.B. Rühren oder Einbringen von großen Scherkräften.

Gegebenenfalls können Hilfsmittel, wie z.B. oberflächenaktive Reagenzien, insbesondere anionische und/oder nicht-ionische Tenside eingesetzt werden, um eine homogene und stabile Dispersion zu erhalten.

Bevorzugt umfasst das anionische Tensid mindestens eine Phosphat-, Phosphonat-, Sulfat-, Sulfonat-, Carboxylat-, Sulfoacetat-, Sulfosuccinat- und/oder Tauratgruppe. In einer weiter bevorzugten Ausführungsform ist das anionische Tensid ausgewählt aus Mono-, Di-(C₄₋₂₂-Alkyl(alkoxy))phosphat, Mono-, Di-(C₄₋₂₂-Alkyl)phosphonat, C₄₋₂₂-Alkylaminophosphonat, C₄₋₂₂-Alkyl(alkoxy)sulfat, sekundärem Alkylsulfonat, Petroleumsulfonat, C₄₋₂₂-Alkylsulfonat, C₄₋₂₂-Alkylarylsulfonat, Fettalkoholethercarboxylat, Fettsäuresalz, Fettalkylsulfoacetat, Fettsäureamidethersulfat, Fettalkoholethercarboxylat, Nonylphenolethersulfat, Fettalkylethersulfat, C₄₋₂₂-Alkylpolyalkoxylenphosphat und C₄₋₂₂-Alkylpolyalkoxylensulfat.

Das nicht-ionische Tensid ist bevorzugt ein Alkoxylierungsprodukt von Fettsäure, Fettsäureester, Fettsäureamin, Fettsäureamid, Fettalkohol, aliphatischem Mono-, Di- oder Tri-Alkohol, Mono-, Di- oder Tri-Glycerid, Alkylphenol, Sorbitanfettsäure und Zuckerderivaten oder Trialkylphenolpolyalkoxylen oder ein Blockcopolymer, z.B. Poly(ethylenoxid-co-propylenoxid), ausgewählt aus der Gruppe bestehend aus alkoxylierten C₉-C₂₅-Fettalkoholen, alkoxylierten C₉₋₂₅-Fettsäureaminen, alkoxylierten C₉-C₂₅-Fettsäureamiden, an der Carboxylatfunktion alkoxylierten C₈-C₂₅-Fettsäuren, alkoxylierten C₈-C₂₅-Fettsäureestern, alkoxylierten C₈-C₂₅-Alkylphenolen und alkoxylierten Mono-, Di- oder Triglyceriden von C₈-C₂₅-Fettsäuren und/oder deren Veresterungsprodukten mit C₈-C₂₅-Fettsäuren oder Trialkylphenylpolyalkoxylen oder einem Block-Polymer, z.B. Poly(ethylenoxid-co-propylenoxid), oder Fettalkoholpoly(ethylenoxid-co-propylenoxid) sowie Mischungen davon. Die Anzahl der Alkoxylengruppen im nichtionischen Tensid beträgt mindestens 8, bevorzugt 8-85, weiter bevorzugt 10-85 und am meisten bevorzugt 10-80 Wiederholungseinheiten. Die Alkylgruppen können jeweils unabhängig voneinander verzweigt oder geradkettig, gesättigt oder ungesättigt sein.

Bevorzugt werden in Schritt (a) 40-80 mol-%, stärker bevorzugt 40-70 mol-%, stärker bevorzugt 40-60 mol-% oder stärker bevorzugt 50-70 mol-% M(1), 5-50 mol-%, stärker bevorzugt 25-50 mol-% oder stärker bevorzugt 10-40 mol-% M(2), 1-20 mol-%, stärker bevorzugt 5-20 mol-%, stärker bevorzugt 7-20 mol-% oder 1-10 mol-%, stärker bevorzugt 1-8 mol-% M(3) und 0-10 mol-%, stärker bevorzugt 0-5 mol-% M(4) (mit M(1)+M(2)+M(3)+ggf. M(4)=100 mol-%) als Lösung oder Dispersion bereitgestellt.

Entsprechend liegt das molare Verhältnis M(1):M(2):M(3):M(4) bevorzugt bei 9-20:1-12:0,1-3:0-3, stärker bevorzugt bei 4-6:2,5-5:0,5-2:0-1.

Die Polymerisation der nach Schritt (a) erhaltenen Mischung in Schritt (b) erfolgt bevorzugt radikalisch, insbesondere in Form einer radikalischen Lösungspolymerisation. Hierzu werden bevorzugt Radikalstarter, wie z.B. anorganische Persulfate, wie z.B. Ammoniumpersulfat, Kaliumpersulfat, Natriumpersulfat, Hydroperoxide wie z.B. Cumolhydroperoxid und tert-Butylhydroperoxid, Dialkylperoxide wie z.B. Di-tert-butylperoxid und Dicumolperoxid, Peroxyester, wie z.B. tert-Butylperbenzoat, Diacylperoxid wie z.B. Benzoylperoxid und Lauroylperoxid und Azoverbindungen wie z.B. Azobisisobutyronitril, und Azobisvaleronitril, verwendet. Der Gewichtsanteil an Radikalstarter bezogen auf die Gesamtmasse des Polymers liegt bevorzugt bei 3-10 Gew.-%.

Besonders bevorzugt wird ein Redoxinitiatorsystem verwendet, das eine Kombination von einem Reduktionsmittel, z.B. Natriumhypophosphit, Natriumpyrosulfit, Eisensalz und/oder Ascorbinsäure und einer Peroxyverbindung umfasst. Solche Redoxinitiatorsysteme führen idealerweise zu einer geringen Induktionszeit und einer homogenen Molmassenverteilung.

Bevorzugt werden bei der Polymerisation vor oder während des Schritts (b) auch Kettenregler, wie z.B. Hypophosphit und/oder Mercaptan, wie z.B. Laurylmercaptan verwendet. Die Verwendung von Kettenreglern ermöglicht die Steuerung des Molekulargewichts des Polymers und der Polydispersität. Die Kettenregler werden bevorzugt in einem Anteil von 0,1-10 Gew.-%, stärker bevorzugt 1-7 Gew.-% und am stärksten bevorzugt 2-3,5 Gew.-% bezogen auf die Gesamtmasse der Monomere zugegeben.

Ferner können auch Vernetzer, wie z.B. Triallyamin, Divinylbenzol und Glycidylmethacrylat, bevorzugt in einem Anteil von 0,1-12 Gew.-%, stärker bevorzugt 0,1-6 Gew.-%, bezogen auf die Gesamtmasse der Monomere, eingesetzt werden.

Die radikalische Polymerisation erfolgt bevorzugt bei erhöhter Temperatur, z.B. 30-100 °C, bevorzugt 30-80 °C, bevorzugt unter Rühren. Die Durchführung einer radikalischen Polymerisation in Lösung oder Dispersion ist dem Fachmann bekannt. Schritt (b) ist üblicherweise beendet, wenn der Restmonomergehalt bei <5 Gew.-%, bevorzugt <2 Gew.-% liegt.

Das nach Schritt (b) erhaltene Polymerisat, insbesondere Emulsionspolymerisat oder Lösungspolymerisat wird anschließend neutralisiert. Die Neutralisation erfolgt bevorzugt mit einer Base, besonders bevorzugt mit Alkalihydroxid, wie z.B. Natriumhydroxid und/oder Kaliumydroxid bzw. Erdalkalihydroxid wie z.B. Magnesiumhydroxid, Amin, Ammoniak oder einer Mischung davon.

Mindestens 75 mol-% der von den Monomeren M(1) und M(3) stammenden Wiederholungseinheiten W(1) und W(3) liegen nach der Neutralisation als mindestens monovalentes Salz bzw. mindestens einfach deprotoniert vor. Die entsprechende Menge kann entweder anhand der Ausgangsmaterialien berechnet oder über Titrationsmessungen eingestellt werden.

Es wurde überraschenderweise gefunden, dass durch Einstellen des Salzanteils der Wiederholungseinheiten W(1) und W(3) im Bereich von ≥75 mol-%, stärker bevorzugt im Bereich von 75-99,9 mol-%, noch stärker bevorzugt im Bereich von 80-90 mol-%, eine hervorragende Substantivität erzielt wird, und die Viskosität der Zusammensetzung im Vergleich zu Zusammensetzungen, in denen weniger als 75 mol-% der von den Monomeren M(1) und M(3) stammenden Wiederholungseinheiten W(1) und W(3) als Salz vorliegen, reduziert ist. Dies ermöglicht hervorragende Effekte sowie eine erleichterte Verarbeitbarkeit und Pumpbarkeit des Produkts.

In einem optionalen Schritt (d) kann Wasser und/oder organisches Lösungsmittel, insbesondere Wasser und/oder organisches Lösungsmittel mit einem Siedepunkt von ≤100°C bei Normalbedingungen, der nach Schritt (c) erhaltenen Mischung abdestilliert oder entfernt werden. Üblicherweise werden insbesondere organische Lösungsmittel, insbesondere organische Lösungsmittel mit einem Siedepunkt von ≤100°C bei Normalbedingungen, entfernt. Zur Aufkonzentrierung oder zur Bereitstellung des Polymers als trockenes Pulver oder Granulat kann im Schritt (d) das für die Lösung oder Dispersion verwendete Lösungsmittel, insbesondere Wasser und/oder organisches Lösungsmittel teilweise oder vollständig abdestilliert werden. Bevorzugt hat die Zusammensetzung nach Schritt (c) oder (d) einen Feststoffanteil von 15-50 Gew.-%, bevorzugt 25-40 Gew.-% bezogen auf die Gesamtmasse der erhaltenen Mischung.

Ein weiterer Aspekt der Erfindung ist auf ein Polymer gerichtet, das durch das oben beschriebene Verfahren erhältlich ist. Dieses Polymer hat bevorzugt einen pH-Wert von 6-7, stärker bevorzugt 6,2-6,5 gemessen in einer 30%igen Lösung des Polymers in destilliertem Wasser bei 20 °C. Bevorzugt ist die Löslichkeit des Polymers bei 20 °C in destilliertem Wasser bei 100-600 g/L, stärker bevorzugt 200-300 g/L.

Die vorliegende Erfindung ist auch auf eine Zusammensetzung gerichtet, die
(A) mindestens ein Polymer gemäß der vorliegenden Erfindung,
(B) Wasser und ggf. ein Lösungsmittel wie z.B. C₂₋₈-Alkohol, Glykol, Glykolester, Ester, Keton und/oder Polyalkylenglykol, insbesondere Polyethylenglykol oder Polypropylenglykol, und
(C)ggf. ein oder mehrere Additive, wie z.B. anionisches und/oder nicht-ionisches Tensid, UV-Stabilisator oder Salz, wie z.B. Natrium-, Aluminium-, Zink- oder Magnesiumsulfat und/oder Calciumchlorid umfasst.

Die unter Schritt (C) genannten Salze können die Substantivität der erfindungsgemäßen Polymere weiter erhöhen, d.h. die Affinität der Polymere an ein Substrat kann verbessert werden.

Bevorzugt umfasst die Zusammensetzung der vorliegenden Erfindung
(A) mindestens ein Polymer der vorliegenden Erfindung,
(B) Wasser und ggf. ein organisches Lösungsmittel wie z. B. Ethanol, und
(C) ggf. ein Additiv.

Die Zusammensetzung umfasst bevorzugt 15-50 Gew.-%, stärker bevorzugt 25-40 Gew.-%, der Komponente (A) bezogen auf das Gesamtgewicht der Zusammensetzung.

Die Zusammensetzung hat bevorzugt eine Viskosität von 50-1200 mPas, weiter bevorzugt 50-600 mPas, stärker bevorzugt 100-300 mPas und am stärksten bevorzugt von 200-700 mPas bei 20 °C gemessen gemäß DIN 53019/ISO 3219, z.B. gemessen mit einem Haake Viskosimeter VT3R.

Die Zusammensetzung hat bevorzugt einen pH-Wert im Bereich von 6-7, weiter bevorzugt 6,2-6,5, bei 20 °C.

Die Zusammensetzung kann darüber hinaus mit Lösungsmittel, beispielsweise mit Wasser verdünnt werden. Bevorzugt kann der Feststoffgehalt des Polymers auf 0,5-2 Gew.-% bezogen auf die Gesamtmasse der Zusammensetzung eingestellt werden.

Das erfindungsgemäße Polymer oder die erfindungsgemäße Zusammensetzung eignet sich hervorragend zur Verbesserung der Echtheit, insbesondere der Farbechtheit z.B. Schweiß-, Wasch-, Licht-, Wasser- und Reibechtheit von amid- und/oder aminogruppenhaltigen Substraten, Gleichzeitig kann das erfindungsgemäße Polymer auch vorteilhaft als Fleckenschutz eingesetzt werden. Auch eignet sich das Polymer zum Gerben oder Nachgerben von Leder.

Unter "Echtheit", insbesondere "Farbechtheit" wird im Folgenden die Widerstandsfähigkeit von gefärbten Substraten gegenüber physikalischen, chemischen und photochemischen Einflüssen verstanden. "Farbechtheit" umfasst Wasserechtheit, z.B. gegenüber Salz- und Chlorwasser, Waschechtheit, Schweißechtheit, Reibechtheit aber auch Lichtechtheit, also der Widerstandsfähigkeit gegenüber UV- und Tageslicht. Wasser- und Waschechtheit bezeichnet die Widerstandsfähigkeit gegenüber Salz- und Chlorwasser sowie gegen Waschen bei verschiedenen Temperaturen in herkömmlichen Waschlaugen. Die Waschechtheit kann beispielsweise nach DIN EN ISO 105-C06 A1S (40 °C) bestimmt werden. Die Wasserechtheit kann beispielsweise nach DIN EN ISO 105-E01 untersucht werden. Für die Chlorbadwasserechtheit können standardisierte Tests gemäß DIN EN ISO 105-E03 verwendet werden.

Unter Schweißechtheit versteht man die Widerstandsfähigkeit gegenüber menschlichem Schweiß mit seinen sauren und alkalischen Komponenten. Diese können den Farbstoff angreifen und zu einer Entfärbung bzw. Verfärbung führen. Die Schweißechtheit kann beispielsweise gemäß DIN EN ISO 105-E04 gemessen werden. Schließlich bezeichnet die Reibechtheit die Widerstandsfähigkeit gegenüber Abreiben durch mechanische Beanspruchung.

Die amid- oder aminogruppenhaltigen Substrate sind bevorzugt aus natürlichen oder synthetischen Materialien, insbesondere Wolle, z.B. Schafwolle, Kaschmir, Mohair, oder Ziegenhaar, Seide, Polyamid, wie z.B. Polyamid 6.0 und Polyamid 6.6, Polyamidgemischen, Lederimitat, Leder oder Mischungen davon. Geeignete Substrate der vorliegenden Erfindung sind vorzugsweise flexible Substrate, wie z.B. textile Substrate, Lederimitate oder Leder. Insbesondere sind die Substrate Textilien, wie Fasern, linienförmige Gebilde wie Bindfäden, Fäden, Garne, Leinen, Schnüre, Seile, Zwirne, Gewebe, Gewirke, Vliesstoffe, Watte, textile Halb- und Fertigfabrikate und daraus hergestellte Fertigwaren.

Die Textilien werden beispielsweise für die Bekleidungsindustrie wie z.B. für Sport-, Schwimm- und Freizeitbekleidung; für Heimtextilien wie z.B. für Teppiche, Vorhänge, Möbelstoffe oder technische Textilien wie z.B. Arbeitsschutzkleidung verwendet.

In einem weiteren Aspekt betrifft die vorliegende Erfindung ein Verfahren zur Ausrüstung von Substraten mit einem Polymer gemäß der vorliegenden Erfindung oder einer Zusammensetzung der vorliegenden Erfindung umfassend die Schritte
(i) Bereitstellen eines Polymers wie oben beschrieben in einer wässrigen Lösung oder wässrigen Dispersion oder einer Zusammensetzung wie oben beschrieben,
(ii) Aufbringen der Mischung aus Schritt (i) auf ein Substrat insbesondere eine Faser, ein Gewebe, ein Gewirk, ein Vlies, einen Filz, ein Geflecht, ein Lederimitat oder Leder und
(iii) Trocknen des nach Schritt (ii) erhaltenen Produkts bei erhöhter Temperatur.

Bevorzugt ist das Substrat wie oben beschrieben.

Die wässrige Lösung oder wässrige Dispersion im Schritt (i) enthält bevorzugt Wasser und ggf. organisches Lösungsmittel wie z.B. C₂₋₈ Alkohol, Glykol, Glykolester, Ester, Keton und/oder Polyalkylenglykol und enthält bevorzugt 0,1-2 Gew.-%, stärker bevorzugt 0,2-1,5 Gew.-% und am stärksten bevorzugt 0,6-1,2 Gew.-% Polymer bezogen auf das Gesamtgewicht der wässrigen Lösung oder wässrigen Dispersion oder Zusammensetzung.

Typischerweise ist der pH-Wert der wässrigen Lösung oder Dispersion im Schritt (i) zwischen 3 und 6,5, bevorzugt zwischen 3 und 5.

Das Aufbringen der Mischung auf ein Substrat erfolgt mit dem Fachmann bekannten Verfahren, wie z.B. durch Sprüh-, Foulardier-, Tauch-, Auszieh-, Streich-, Schaum- oder Pflatsch-Verfahren.

Im Falle von Textilsubstraten kann das Polymer durch Aufbringen mittels Zwangsapplikation oder Ausziehverfahren aufgebracht werden. Üblicherweise wird bei der Zwangsapplikation eine Flotte in der gewünschten Konzentration bereitgestellt und mittels einer Zwangsapplikation aus wässrigem Medium auf dem Foulard mit Flottenaufnahmen von 40-100 % aufgebracht.

Üblicherweise wird das Verfahren so eingestellt, dass etwa 0,1-2 Gew.-%, bevorzugt 0,1-1,5 Gew.-%, stärker bevorzugt 0,3-1,2 Gew.-% des erfindungsgemäßen Polymers bezogen auf das Trockengewicht des Substrats aufgetragen werden.

Das Trocknen des erhaltenen Produkts gemäß Schritt (iii) erfolgt bevorzugt bei 80-140 °C, stärker bevorzugt bei 100-120 °C.

Ein weiterer Aspekt der vorliegenden Erfindung ist eine Faser, ein Textil, ein Lederimitat oder Leder, das mit einem Polymer der vorliegenden Erfindung oder einer Zusammensetzung der vorliegenden Erfindung ausgerüstet ist oder durch ein Verfahren der vorliegenden Erfindung hergestellt wurde.

Die vorliegende Erfindung wird mithilfe der folgenden Beispiele näher erläutert, ist aber auf diese nicht beschränkt:

### Beispiele

### Herstellungsbeispiel 1:

In einem geeigneten Vierhalskolben, ausgestattet mit Destillationskühler, regelbarem Rührer und Innenthermometer werden 43 g Wasser, 0,05 g Diethylentriaminpenta(methylen)phosphonsäure-Na-salz, 5 g Natriumhypophosphit-1-hydrat und 70 g Isopropanol vorgelegt. Nach mehrmaligem Inertisieren mit Stickstoff wird der Kolben auf Rückfluss erwärmt.

Eine Lösung, die 16,8 g Natriumstyrolsulfonat (0,08 mol), 70,5 g Wasser, 82,5 g Isopropanol, 40,3 g Acrylsäure (0,56 mol), 59,6 g Styrol (0,57 mol) enthält, wird innerhalb von 4 h in den Vierhalskolben dosiert. Eine Lösung von 8 g Natriumpersulfat in 37 ml Wasser wird innerhalb von 5 h ebenfalls in den Vierhalskolben dosiert. Anschließend wird die Lösung 1 h bei Rückfluss gehalten. Danach erfolgt die Zugabe von 1,85 g Natriumpersulfat in 41 g Wasser und die Lösung wird erneut 1 h unter Rückfluss gehalten. Die Lösung wird im Anschluss abgekühlt und mit Natronlauge 50% versetzt, um einen Neutralisationsgrad von mindestens 75 mol-% zu erzielen. Daraufhin erfolgt die Vakuumdestillation, um das Isopropanol zu entfernen. Wasser wird abschließend hinzugefügt, um eine Trockensubstanz von ca. 30% zu erhalten.

### Herstellungsbeispiel 2:

In einem geeigneten Vierhalskolben, ausgestattet mit Destillationskühler, regelbarem Rührer und Innenthermometer werden 43 g Wasser, 0,05 g Diethylentriaminpenta(methylen)phosphonsäure-Na-salz, 5 g Natriumhypophosphit-1-hydrat und 70 g Isopropanol vorgelegt. Nach mehrmaligem Inertisieren mit Stickstoff wird der Kolben auf Rückfluss erwärmt.

Eine Lösung, die 16,5 g Natriumstyrolsulfonat (0,08 mol), 70,5 g Wasser, 82,5 g Isopropanol, 39,8 g Acrylsäure (0,55 mol), 58,9 g Styrol (0,56 mol) und 6 g Cardolite NX 2026 (0,02 mol) enthält, wird innerhalb von 4 h in den Vierhalskolben dosiert. Eine Lösung von 8 g Natriumpersulfat in 37 ml Wasser wird innerhalb von 5 h ebenfalls in den Vierhalskolben dosiert. Anschließend wird die Lösung 1 h bei Rückfluss gehalten. Danach erfolgt die Zugabe von 1,85 g Natriumpersulfat in 41 g Wasser und die Lösung wird erneut 1 h bei Rückfluss gehalten. Die Lösung wird im Anschluss abgekühlt und mit Natronlauge 50% versetzt, um einen Neutralisationsgrad von mindestens 75 mol- % zu erzielen. Daraufhin erfolgt die Vakuumdestillation, um das Isopropanol zu entfernen. Wasser wird abschließend hinzugefügt, um eine Trockensubstanz von ca. 30% zu erhalten.

### Beispiel 3: Anwendungstechnik

Mit Acid Red 426 gefärbte Polyamid 6.6-Maschenware wurde mit den Zubereitungen aus den Beispielen 1 und 2 nachbehandelt.

Die Nachbehandlung erfolgte im Ausziehverfahren bei einem Flottenverhältnis 1:10 für 20 min bei 70 °C, indem die Zubereitungen aus den Beispielen 1 und 2 mit 4% bezogen auf das Warengewicht eingesetzt wurden. Der pH-Wert wurde mittels Puffersystem auf Ameisensäure/Natriumformiat-Basis auf 3 eingestellt.

Die Bestimmung der Waschechtheit bei 40 °C der nachbehandelten Muster erfolgte nach DIN EN ISO 105-C06 A1S (40 °C) mit Multifibre-Begleitgewebe.

Die Bewertung der Änderung der Farbe erfolgte mittels Graumaßstab nach DIN EN 20102-A02.

Die Farbe der Textilproben wurde hierzu auf einer Skala von 5 bis 1 bewertet, basierend auf der Grauskala für Farbveränderung. Die Skala reicht von 5 bis 1, wobei 5 eine vernachlässigbare oder keine Farbänderung und 1 eine signifikante Farbänderung darstellt. Die Ergebnisse für die Zubereitungen aus Beispiel 1 und 2 sind nachstehend aufgeführt:

| Muster | Farbänderung |
|---|---|
| Nicht nachbehandelt | 4 |
| Beispiel 1 | 4-5 |
| Beispiel 2 | 4-5 |

Die Bewertung des Anblutens erfolgte mittels Graumaßstab nach DIN EN ISO 105-A03.

Zur Bewertung des Anblutens wurde das in der Prüfung behandelte und ein nicht behandeltes Begleitgewebe in einer Ebene nebeneinandergelegt und mit dem Graumaßstab verglichen. Die Skala reicht von 5 bis 1, wobei eine Bewertung von 5 nur dann gegeben wird, wenn zwischen dem in der Prüfung behandelten und dem nicht behandelten Begleitgewebe kein Unterschied besteht. Eine Bewertung von 1 stellt einen signifikanten Unterschied zwischen behandeltem und unbehandeltem Begleitgewebe dar.

| Begleitgewebe (Multifibre) | Nicht nachbehandelt | Beispiel 1 | Beispiel 2 |
|---|---|---|---|
| Celluloseacetat | 4 | 4-5 | 4-5 |
| Baumwolle | 1-2 | 3-4 | 3-4 |
| Polyamid 6.6 | 1 | 3-4 | 3-4 |
| Polyester | 4-5 | 4-5 | 4-5 |
| Polyacrylnitril | 4-5 | 4-5 | 4-5 |
| Wolle | 3-4 | 4-5 | 4-5 |

Die erfindungsgemäßen Zubereitungen der Beispiele 1 und 2 erzielen somit eine hervorragende Waschechtheit und verhindern das Anbluten mitgewaschener Textilien.

### Vergleichsbeispiel 1:

In einem geeigneten Vierhalskolben, ausgestattet mit Destillationskühler, regelbarem Rührer und Innenthermometer wurden 68,25 g Ethanol 99%ig, 21,75 g deionisiertes Wasser und 0,10 g einer 40%-igen Lösung des Pentanatriumsalzes von Diethylentriaminpentaessigsäure vorgelegt. Der Kolben wurde nach mehrmaligem Inertisieren mit Stickstoff auf Rückfluss erwärmt. Eine Lösung von 2,64 g Ammoniumpersulfat in 15 g deionisiertem Wasser wurde zugegeben.

Eine Lösung, die 15 g Natriumstyrolsulfonat (0,073 mol), 48,2 g deionisiertes Wasser, 159,25 g Ethanol (99%), 112,5 g Acrylsäure 80% in deionisiertem Wasser (1,249 mol) und 45 g Styrol (0,432 mol) enthält, wurde innerhalb von 3 h in den Vierhalskolben dosiert. Eine Lösung von 3,36 g Ammoniumpersulfat in 20 ml deionisiertem Wasser wurde innerhalb von 3,5 h ebenfalls in den Vierhalskolben dosiert. Anschließend wurde die Lösung 1 h bei Rückfluss gehalten. Die Lösung wurde im Anschluss abgekühlt und mit einer Lösung aus 34,75 g Natriumhydroxid-Pellets in 150 g deionisiertem Wasser versetzt. Daraufhin erfolgte die Vakuumdestillation, um Ethanol zu entfernen. Deionisiertes Wasser wurde dem Kolben auf ein Nettogewicht von 430 g zugegeben.

Es ergab sich eine Trockensubstanz von ca. 39%. Das Produkt ist hochviskos.

Nach Einstellung der Trockensubstanz auf ca. 30%, ergab sich eine Viskosität von 30.000 mPas und ein pH-Wert von 5,9.

Molare Verhältnisse im Polymer:

| | |
|---|---|
| Natriumstyrolsulfonat: | 4,16 mol% |
| Acrylsäure: | 21,66 mol% |
| Natriumacrylat: | 49,54 mol% |
| Styrol: | 24,62 mol% |

### Vergleichsbeispiel 2:

In einem geeigneten Vierhalskolben, ausgestattet mit Destillationskühler, regelbarem Rührer und Innenthermometer wurden 68,25 g Ethanol 99%ig, 21,75 g deionisiertes Wasser und 0,10 g einer 40%-igen Lösung des Pentanatriumsalzes von Diethylentriaminpentaessigsäure vorgelegt. Der Kolben wurde nach mehrmaligem Inertisieren mit Stickstoff auf Rückfluss erwärmt. Eine Lösung von 2,64 g Ammoniumpersulfat in 15 g deionisiertem Wasser wurde zugegeben.

Eine Lösung, die 3 g Natriumstyrolsulfonat (0,015 mol), 49,72 g deionisiertes Wasser, 159,25 g Ethanol 99%ig, 104,88 g Acrylsäure 80% in deionisiertem Wasser (1,164 mol) und 37,5 g Styrol (0,360 mol) enthielt, wurde innerhalb von 3 h in den Vierhalskolben dosiert. Eine Lösung von 3,36 g Ammoniumpersulfat in 20 ml Wasser wurde innerhalb von 3,5 h ebenfalls in den Vierhalskolben dosiert. Anschließend wurde die Lösung 1 h bei Rückfluss gehalten. Die Lösung wurde im Anschluss abgekühlt und mit einer Lösung aus 46,57 g Natriumhydroxid-Pellets in 150 g deionisiertem Wasser versetzt. Daraufhin erfolgt die Vakuumdestillation, um Ethanol zu entfernen. Deionisiertes Wasser wurde auf ein Nettogewicht von 430 g zugegeben.

Es ergab sich eine Trockensubstanz von ca. 34%, ein pH-Wert von 7,7 und eine Viskosität von 400 mPas.

Eine Herstellung ausgehend von Natriumacrylat-Monomer ist nicht möglich. Die Deprotonierung erfolgte daher über die Zugabe von Natriumhydroxid.

Molare Verhältnisse im Polymer:

| | |
|---|---|
| Natriumstyrolsulfonat: | 0,97 mol% |
| Natriumacrylat: | 75,63 mol% |
| Styrol: | 23,40 mol% |

### Vergleichsbeispiel 3

In einem geeigneten Vierhalskolben, ausgestattet mit Destillationskühler, regelbarem Rührer und Innenthermometer wurden 130 g Isopropanol und 35 g deionisiertes Wasser vorgelegt. Der Kolben wurde nach mehrmaligem Inertisieren mit Stickstoff auf 80°C erwärmt.

Eine Lösung, die 20,7 g Natriumstyrolsulfonat (0,100 mol), 45 g deionisiertes Wasser, 110 g Methacrylsäure (1,278 mol) und 19 g Butylacrylat (0,148 mol) enthielt, wurde innerhalb von ca. 2 h in den Vierhalskolben dosiert. Eine Lösung von 16,6 g Natriumpersulfat (0,069 mol) in 60 ml deionisiertem Wasser wurde ebenfalls innerhalb von ca. 2 h in den Vierhalskolben dosiert. Anschließend wurde die Lösung 1 h bei Rückfluss gehalten. Zur Lösung wurden im Anschluss 500 g deionisiertes Wasser zugegeben. Daraufhin erfolgte die Vakuumdestillation, um Isopropanol zu entfernen. Es wurde so lange destilliert, bis eine Innentemperatur von 99-100°C erreicht wurde.

Die Trockensubstanz des Musters lag bei ca. 20%, die Viskosität bei 350 mPas und der pH-Wert pur bei 1,3. Der pH-Wert einer 1%igen Lösung lag bei 3,5.

Molare Verhältnisse im Polymer:

| | |
|---|---|
| Natriumstyrolsulfonat: | 6,55 mol% |
| Methacrylsäure: | 83,75 mol% |
| Butylacrylat: | 9,70 mol% |

### Vergleichsbeispiel 4

Ausgehend von Vergleichsbeispiel 3 wurde Butylacrylat mengengleich durch Styrol ersetzt.

In einem geeigneten Vierhalskolben, ausgestattet mit Destillationskühler, regelbarem Rührer und Innenthermometer wurden 130 g Isopropanol und 35 g deionisiertes Wasser vorgelegt. Der Kolben wurde nach mehrmaligem Inertisieren mit Stickstoff auf 80°C erwärmt.

Eine Lösung, die 20,7 g Natriumstyrolsulfonat (0,100 mol), 45 g deionisiertes Wasser, 110 g Methacrylsäure (1,278 mol) und 19 g Styrol (0,182 mol) enthielt, wurde innerhalb von ca. 2 h in den Vierhalskolben dosiert. Eine Lösung von 16,6 g Natriumpersulfat (0,069 mol) in 60 ml Wasser wurde ebenfalls innerhalb von 2 h in den Vierhalskolben dosiert. Anschließend wurde die Lösung 1 h bei Rückfluss gehalten. Zur Lösung wurden im Anschluss 500 g deionisiertes Wasser zugegeben. Daraufhin erfolgte die Vakuumdestillation, um Isopropanol zu entfernen. Es wurde so lange destilliert bis eine Innentemperatur von 99-100°C erreicht wurde.

Die Trockensubstanz des Musters lag bei ca. 20%. Das Muster war schnittfest, eine Viskosität war nicht messbar. Der pH-Wert wurde deshalb von einer 1%igen Lösung ermittelt und lag bei 3,5.

Molare Verhältnisse im Polymer:

| | |
|---|---|
| Natriumstyrolsulfonat: | 6,41 mol% |
| Methacrylsäure: | 81,92 mol% |
| Styrol: | 11,67 mol% |

### Anwendungstechnik der Vergleichsbeispiele:

Die Bewertung der Farbänderung erfolgte wieder mittels Graumaßstab nach DIN EN 20102-A02:

| Muster | Farbänderung |
|---|---|
| Nicht nachbehandelt | 4 |
| Herstellungsbeispiel 1 | 4-5 |
| Vergleichsbeispiel 1 | 4 |
| Vergleichsbeispiel 2 | 4 |
| Vergleichsbeispiel 3 | 4 |
| Vergleichsbeispiel 4 | 4 |

Anschließend wurde mit Acid Red 426 gefärbte Polyamid 6.6-Maschenware mit den Polymerisaten gemäß den Vergleichsbeispielen 1-4 nachbehandelt. Hierzu wurde der Feststoffgehalt der Polymerisate mit deionisiertem Wasser eingestellt. Der pH-Wert wurde mittels Puffersystem auf Ameisensäure/ Natriumformiat-Basis jeweils auf 3 eingestellt.

Die Nachbehandlung erfolgte im Ausziehverfahren für 20 min bei 70 °C. Die Einsatzmenge der jeweiligen Zubereitung betrug 4 % bezogen auf das Warengewicht. Die Bestimmung der Waschechtheit bei 40 °C der nachbehandelten Muster erfolgte nach DIN EN ISO 105-C06 A1S (40 °C) mit Multifibre-Begleitgewebe.

Die Bewertung des Anblutens erfolgte mittels Graumaßstab nach DIN EN ISO 105-A03.

Zur Bewertung des Anblutens wurde das in der Prüfung behandelte und ein nicht behandeltes Begleitgewebe in einer Ebene nebeneinandergelegt und mit dem Graumaßstab verglichen (s.o.).

| Begleitgewebe (Multifibre) | Nicht nachbehandelt | *Vergleichsbeispiel 1* | *Vergleichsbeispiel 2* | *Vergleichsbeispiel 3* | *Vergleichsbeispiel 4* | *Herstellungsbeispiel 1* |
|---|---|---|---|---|---|---|
| Celluloseacetat | 4 | 4-5 | 4-5 | 4-5 | 4-5 | 4-5 |
| Baumwolle | 1-2 | 2-3 | 2-3 | 2 | 2 | 3-4 |
| Polyamid 6.6 | 1 | 2-3 | 2-3 | 2 | 2 | 3-4 |
| Polyester | 4-5 | 4-5 | 4-5 | 4-5 | 4-5 | 4-5 |
| Polyacrylnitril | 4-5 | 4-5 | 4 | 4-5 | 4-5 | 4-5 |
| Wolle | 3-4 | 4-5 | 4-5 | 4-5 | 4-5 | 4-5 |

Es hat sich gezeigt, dass die erfindungsgemäße Zusammensetzung auf allen untersuchten Geweben eine wesentlich bessere Farbechtheit, insbesondere Waschechtheit erzeugt als die Vergleichspolymere.

Die vorliegende Erfindung umfasst folgende Punkte:
1. Polymer, umfassend die
   Wiederholungseinheiten 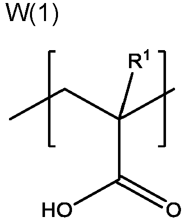 oder ein Salz davon, 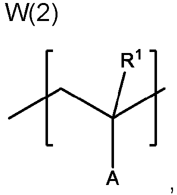 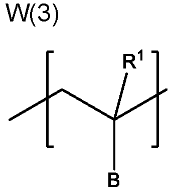 oder ein Salz davon, und ggf. W(4) 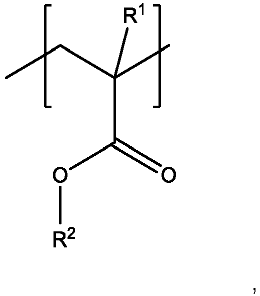 wobei
   R¹ unabhängig voneinander -H, -Aryl oder -Alkyl, insbesondere -CH₃ oder -C₂H₅, bevorzugt H, ist;
   R² unabhängig voneinander -C₂₋₈-Alkyl oder
   -Aryl ggf. substituiert mit C₂₋₂₀-Alkyl oder C₂₋₂₀-Alkenyl, oder
   -CH₂-CH₂-O-Aryl ggf. substituiert mit C₂₋₂₀-Alkyl oder C₂₋₂₀-Alkenyl, bevorzugt -Aryl ist;
   A unabhängig voneinander eine Arylgruppe, insbesondere -Phenyl, - Tolyl, -Xylyl, oder -Naphtyl, besonders bevorzugt Phenyl, ist,
   B unabhängig voneinander eine Arylgruppe, insbesondere -Phenyl, - Tolyl, -Xylyl, oder -Naphtyl, besonders bevorzugt Phenyl, ist, welche mit 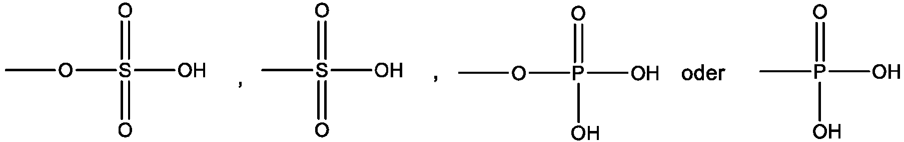 substituiert ist, wobei mindestens 75 mol-% der Wiederholungseinheiten W(1) und W(3) als mindestens monovalentes Salz, bevorzugt als Natriumsalz vorliegen.
2. Polymer nach Punkt 1, wobei das Polymer 40-80 Mol-% W(1), 5-50 Mol-% W(2), 0,4-10 Mol-%, bevorzugt 1-10 Mol-% W(3) und 0-10 Mol-% W(4) enthält.
3. Polymer nach Punkt 1 oder 2, wobei das molare Verhältnis W(1):W(2): W(3):W(4)=9-20:1-12:0,1-3:0-3 beträgt.
4. Polymer nach einem der vorhergehenden Punkte, wobei R¹ jeweils -H, A jeweils -Phenyl und B jeweils -substituiertes Phenyl ist.
5. Polymer nach einem der vorhergehenden Punkte, wobei das Polymer zu 100-600 g/Lin dest. Wasser bei 20 °C löslich ist.
6. Polymer nach einem der vorhergehenden Punkte, wobei der pH-Wert einer 30%-igen Lösung in dest. Wasser bei 20 °C 6-7, bevorzugt 6,2-6,5 ist und/oder
   die Viskosität einer 30%-igen Lösung in dest. Wasser 50-600 mPas, bevorzugt 100-300 mPas bei 20 °C ist, gemessen gemäß DIN 53019/ISO 3219.
7. Polymer nach einem der vorhergehenden Punkte, wobei die Wiederholungseinheiten W(1), W(2), W(3) und ggf. W(4) statistisch, alternierend, oder in Blöcken in der Polymerkette angeordnet sind.
8. Verfahren zur Herstellung eines Polymers nach einem der Punkte 1-7, umfassend die Schritte
   (a) Bereitstellen der Monomere 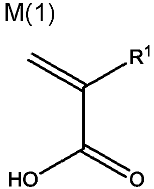 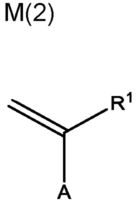 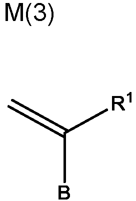 und ggf. M(4) 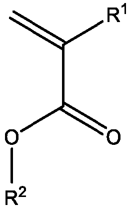 als Lösung oder Dispersion,
   (b) Polymerisieren der nach Schritt (a) erhaltenen Mischung,
   (c) Neutralisieren der nach Schritt (b) erhaltenen Mischung, so dass mindestens 75 mol-% der von den Monomeren M(1) und M(3) stammenden Wiederholungseinheiten W(1) und W(3) als mindestens monovalentes Salz vorliegen, und
   (d) ggf. Destillieren der nach Schritt (c) erhaltenen Mischung.
9. Verfahren nach Punkt 8, wobei in Schritt (a) Wasser und/oder organisches Lösungsmittel, wie z.B. C₂₋₈-Alkohol, Glykol, Glykolester, Ester, Keton und/oder Polyalkylenglykol als Lösungs- oder Dispergiermittel verwendet wird.
10. Verfahren nach einem der Punkte 8-9, wobei in Schritt (a) 40-80 Mol-% M(1), 5-50 Mol-% M(2), 0,4-10 Mol-%, bevorzugt 1-10 Mol-% M(3), 0-10 Mol-% M(4) bereitgestellt werden und/oder das molare Verhältnis M(1):M(2):M(3): M(4) = 9-20:1-12:0,1-3:0-3 in Schritt (a) ist.
11. Verfahren nach einem der Punkte 8-10, wobei in Schritt (b) eine radikalische Polymerisation, bevorzugt unter Verwendung von Radikalstartern, wie z.B. anorganischen Persulfaten, wie z.B. Ammoniumpersulfat, Kaliumpersulfat, Natriumpersulfat, Hydroperoxide wie z.B. Cumolhydroperoxid und tert-Butylhydroperoxid, Dialkylperoxide wie z.B. Di-tert-butylperoxid und Dicumolperoxid, Peroxyester, wie z.B. tert-Butylperbenzoat, Diacylperoxid wie z.B. Benzoylperoxid und Lauroylperoxid und Azoverbindungen wie z.B. Azobisisobutyronitril, und Azobisvaleronitril, durchgeführt wird.
12. Verfahren nach Punkt 11, wobei der Radikalstarter ein Redoxinitiatorsystem ist, der eine Kombination von einem Reduktionsmittel, z.B. Natriumhypophosphit, Natriumpyrosulfit, Eisensalzen und/oder Ascorbinsäure und einer Peroxyverbindung umfasst.
13. Verfahren nach einem der Punkte 8-12, wobei vor oder während des Schritts (b) Kettenregler, wie z.B. Hypophosphit und/oder Mercaptan wie z.B. Laurylmercaptan zugegeben werden.
14. Verfahren nach einem der Punkte 8-13, wobei im Schritt (c) der nach Schritt (b) erhaltenen Mischung eine Base, z.B. Alkalihydroxid, Erdalkalihydroxid, Amin, Ammoniak, bevorzugt Natrium- und/oder Kaliumhydroxid, zugegeben wird.
15. Polymer erhältlich durch ein Verfahren nach einem der Punkte 8-14.
16. Polymer nach Punkt 15, wobei der pH-Wert einer 30%-igen Lösung des Polymers in dest. Wasser bei 20 °C 6-7, bevorzugt 6,2-6,5 ist und/oder die Löslichkeit des Polymers bei 20 °C in dest. Wasser 100-600 g/L, bevorzugt 200-300 g/L ist.
17. Polymer nach einem der Punkte 1-16, wobei das Polymer 40-70 mol-% W(1), 25-50 mol-% W(2), 5-20 mol-% W(3) und 0-10 mol-% W(4) enthält, mit der Maßgabe dass das Polymer 30-70 mol-%, bevorzugt 35-70 mol-%, bevorzugt 40-70 mol-%, Wiederholungseinheiten von W(2) und W(3) (W(2)+W(3)) enthält.
18. Zusammensetzung, umfassend
   (A) mindestens ein Polymer nach einem der Punkte 1-7 oder 15-17,
   (B) Wasser und ggf. ein Lösungsmittel, wie z.B. C₂₋₈-Alkohol, Glykol, Glykolester, Ester, Keton und/oder Polyalkylenglykol,
   (C)ggf. ein oder mehrere Additive, wie z.B. anionisches und/oder nicht-ionisches Tensid, UV-Stabilisator oder Salz wie z.B. Natrium-, Aluminium-, Zink- oder Magnesiumsulfat und/oder Calciumchlorid.
19. Zusammensetzung nach Punkt 18, umfassend 15-50 Gew.-%, bevorzugt 25-40 Gew.-%, der Komponente (A) bezogen auf das Gesamtgewicht der Zusammensetzung.
20. Zusammensetzung nach Punkt 18 oder 19, wobei die Zusammensetzung eine Viskosität von 50-1200 mPas, bevorzugt 200-700 mPas bei 20 °C hat, gemessen gemäß DIN 53019/ISO 3219.
21. Zusammensetzung nach einem der Punkte 18-20, wobei der pH-Wert der Zusammensetzung im Bereich von 6-7, bevorzugt 6,2-6,5 bei 20°C liegt.
22. Verwendung des Polymers nach einem der Punkte 1-7 oder 15-17 oder der Zusammensetzung nach einem der Punkte 18-21 zur Verbesserung der Echtheit, insbesondere der Farbechtheit, z.B. Schweiß-, Wasch-, Licht-, Wasser- und Reib-Echtheit, von amid- und/oder aminogruppenhaltigen Substraten, als Fleckenschutz, bevorzugt von Teppichen, und zum Gerben oder Nachgerben von Leder.
23. Verwendung nach Punkt 22, wobei die amid- und/oder aminogruppenhaltigen Substrate gefärbt sind und insbesondere Wolle, Seide, Polyamid, wie Polyamid 6.0 und Polyamid 6.6, Lederimitat, Leder oder Mischungen davon, umfassen.
24. Verfahren zur Ausrüstung von Substraten mit einem Polymer nach einem der Punkte 1-7 oder 15-17 oder einer Zusammensetzung nach einem der Punkte 18-21 umfassend die Schritte:
   (i) Bereitstellen eines Polymers nach einem der Punkte 1-7 oder 15-17 in einer wässrigen Lösung oder wässrigen Dispersion oder einer Zusammensetzung nach einem der Punkte 18-21,
   (ii) Aufbringen der Mischung aus Schritt (i) auf ein Substrat, insbesondere eine Faser, ein Gewebe, ein Gewirk, ein Vlies, einen Filz, ein Geflecht, ein Lederimitat oder Leder, und
   (iii) Trocknen des nach Schritt (ii) erhaltenen Produkts bei erhöhter Temperatur.
25. Verfahren nach Punkt 24, wobei die wässrige Lösung oder wässrige Dispersion im Schritt (i) Wasser und ggf. organisches Lösungsmittel, wie z.B. C₂₋₈-Alkohol, Glykol, Glykolester, Ester, Keton und/oder Polyalkylenglykol enthält und bevorzugt 0,1-2 Gew.-%, stärker bevorzugt 0,2-1,5 Gew.-% und am stärksten bevorzugt 0,6-1,2 Gew.-% Polymer bezogen auf das Gesamtgewicht der wässrigen Lösung oder wässrigen Dispersion enthält.
26. Verfahren nach Punkt 24 oder 25, wobei das Aufbringen gemäß Schritt (ii) durch Sprüh-, Foulardier-, Tauch-, Auszieh-, Streich-, Schaum- oder Pflatsch-Verfahren erfolgt.
27. Verfahren nach einem der Punkte 24-26, wobei Schritt (iii) bei 80-140 °C, bevorzugt 100-120 °C durchgeführt wird.
28. Faser, Textil, Lederimitat oder Leder ausgerüstet mit einem Polymer nach einem der Punkte 1-7 oder 15-17 oder mit einer Zusammensetzung nach einem der Punkte 18-21 oder erhältlich durch ein Verfahren gemäß einem der Punkte 24-27.

## Patentansprüche

1. Polymer, umfassend die
Wiederholungseinheiten 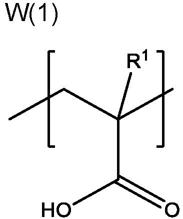 oder ein Salz davon, 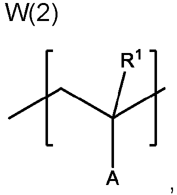 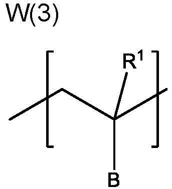 oder ein Salz davon, und ggf. W(4) 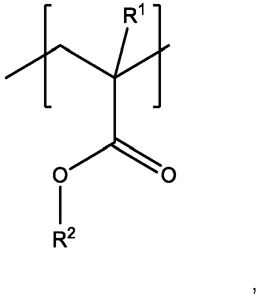 wobei
R¹ unabhängig voneinander -H, -Aryl oder -Alkyl, insbesondere -CH₃ oder -C₂H₅, bevorzugt H, ist;
R² unabhängig voneinander -C₂₋₈-Alkyl oder
-Aryl ggf. substituiert mit C₂₋₂₀-Alkyl oder C₂₋₂₀-Alkenyl, oder
-CH₂-CH₂-O-Aryl ggf. substituiert mit C₂₋₂₀-Alkyl oder C₂₋₂₀-Alkenyl, bevorzugt -Aryl ist;
A unabhängig voneinander eine Arylgruppe, insbesondere -Phenyl, - Tolyl, -Xylyl, oder -Naphtyl, besonders bevorzugt Phenyl, ist,
B unabhängig voneinander eine Arylgruppe, insbesondere -Phenyl, - Tolyl, -Xylyl, oder -Naphtyl, besonders bevorzugt Phenyl, ist, welche mit 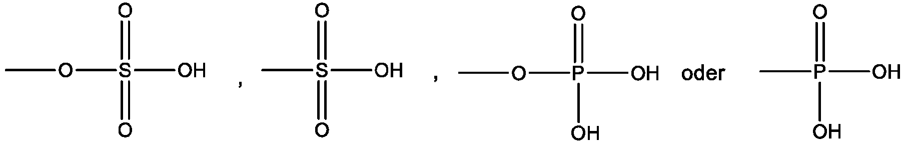
substituiert ist,
wobei mindestens 75 mol-% der Wiederholungseinheiten W(1) und W(3) als mindestens monovalentes Salz, bevorzugt als Natriumsalz vorliegen,
wobei das Polymer bevorzugt 40-80 Mol-% W(1), 5-50 Mol-% W(2), 0,4-10 Mol-% W(3) und 0-10 Mol-% W(4) enthält und/oder
wobei das bevorzugte molare Verhältnis W(1):W(2):W(3):W(4)=9-20:1-12:0,1-3:0-3 beträgt.

2. Polymer nach Anspruch 1, wobei R¹ jeweils -H, A jeweils -Phenyl und B jeweils -substituiertes Phenyl ist.

3. Polymer nach einem der vorhergehenden Ansprüche, wobei das Polymer zu 100-600 g/L in dest. Wasser bei 20 °C löslich ist und/oder
wobei der pH-Wert einer 30%-igen Lösung in dest. Wasser bei 20 °C 6-7, bevorzugt 6,2-6,5 ist und/oder
die Viskosität einer 30%-igen Lösung in dest. Wasser 50-600 mPas, bevorzugt 100-300 mPas bei 20 °C ist, gemessen gemäß DIN 53019/ISO 3219.

4. Verfahren zur Herstellung eines Polymers nach einem der Ansprüche 1-3, umfassend die Schritte
(a) Bereitstellen der Monomere 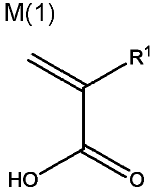 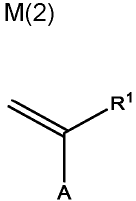 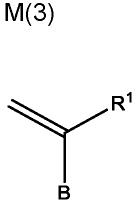 und ggf. M(4) 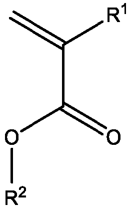 als Lösung oder Dispersion,
(b) Polymerisieren der nach Schritt (a) erhaltenen Mischung,
(c) Neutralisieren der nach Schritt (b) erhaltenen Mischung, so dass mindestens 75 mol-% der von den Monomeren M(1) und M(3) stammenden Wiederholungseinheiten W(1) und W(3) als mindestens monovalentes Salz vorliegen, und
(d) ggf. Destillieren der nach Schritt (c) erhaltenen Mischung.

5. Verfahren nach Anspruch 4, wobei in Schritt (a) Wasser und/oder organisches Lösungsmittel, wie z.B. C₂₋₈-Alkohol, Glykol, Glykolester, Ester, Keton und/oder Polyalkylenglykol als Lösungs- oder Dispergiermittel verwendet wird und/oder
wobei in Schritt (a) 40-80 Mol-% M(1), 5-50 Mol-% M(2), 0,4-10 Mol-% M(3), 0-10 Mol-% M(4) bereitgestellt werden und/oder das molare Verhältnis M(1):M(2):M(3): M(4) = 9-20:1-12:0,1-3:0-3 in Schritt (a) ist.

6. Verfahren nach einem der Ansprüche 4-5, wobei in Schritt (b) eine radikalische Polymerisation, bevorzugt unter Verwendung von Radikalstartern, wie z.B. anorganischen Persulfaten, wie z.B. Ammoniumpersulfat, Kaliumpersulfat, Natriumpersulfat, Hydroperoxide wie z.B. Cumolhydroperoxid und tert- Butylhydroperoxid, Dialkylperoxide wie z.B. Di-tert-butylperoxid und Dicumolperoxid, Peroxyester, wie z.B. tert-Butylperbenzoat, Diacylperoxid wie z.B. Benzoylperoxid und Lauroylperoxid und Azoverbindungen wie z.B. Azobisisobutyronitril, und Azobisvaleronitril, durchgeführt wird und/oder
wobei der Radikalstarter ein Redoxinitiatorsystem ist, der eine Kombination aus einem Reduktionsmittel, z.B. Natriumhypophosphit, Natriumpyrosulfit, Eisensalzen und/oder Ascorbinsäure und einer Peroxyverbindung umfasst.

7. Verfahren nach einem der Ansprüche 4-6, wobei im Schritt (c) der nach Schritt (b) erhaltenen Mischung eine Base, z.B. Alkalihydroxid, Erdalkalihydroxid, Amin, Ammoniak, bevorzugt Natrium- und/oder Kaliumhydroxid, zugegeben wird.

8. Polymer erhältlich durch ein Verfahren nach einem der Ansprüche 4-7.

9. Zusammensetzung, umfassend
(A) mindestens ein Polymer nach einem der Ansprüche 1-3 oder 8,
(B) Wasser und ggf. ein Lösungsmittel, wie z.B. C₂₋₈-Alkohol, Glykol, Glykolester, Ester, Keton und/oder Polyalkylenglykol,
(C)ggf. ein oder mehrere Additive, wie z.B. anionisches und/oder nicht-ionisches Tensid, UV-Stabilisator oder Salz wie z.B. Natrium-, Aluminium-, Zink- oder Magnesiumsulfat und/oder Calciumchlorid,
wobei die Zusammensetzung bevorzugt 15-50 Gew.-%, bevorzugt 25-40 Gew.-%, der Komponente (A) bezogen auf das Gesamtgewicht der Zusammensetzung umfasst.

10. Zusammensetzung nach Anspruch 9, wobei die Zusammensetzung eine Viskosität von 50-600 mPas, bevorzugt 100-300 mPas bei 20 °C hat, gemessen gemäß DIN 53019/ISO 3219 und/oder
wobei der pH-Wert der Zusammensetzung im Bereich von 6-7, bevorzugt 6,2-6,5 bei 20°C liegt.

11. Verwendung des Polymers nach einem der Ansprüche 1-3 oder 8 oder der Zusammensetzung nach einem der Ansprüche 9-10 zur Verbesserung der Echtheit, insbesondere der Farbechtheit, z.B. Schweiß-, Wasch-, Licht-, Wasser- und Reib-Echtheit, von amid- und/oder aminogruppenhaltigen Substraten,
wobei die amid- und/oder aminogruppenhaltigen Substrate bevorzugt gefärbt sind und insbesondere Wolle, Seide, Polyamid, wie Polyamid 6.0 und Polyamid 6.6, Lederimitat, Leder oder Mischungen davon, umfassen.

12. Verfahren zur Ausrüstung von Substraten mit einem Polymer nach einem der Ansprüche 1-3 oder 8 oder einer Zusammensetzung nach einem der Ansprüche 9-10 umfassend die Schritte:
(i) Bereitstellen eines Polymers nach einem der Ansprüche 1-3 oder 8 in einer wässrigen Lösung oder wässrigen Dispersion oder einer Zusammensetzung nach einem der Ansprüche 9-10,
(ii) Aufbringen der Mischung aus Schritt (i) auf ein Substrat, insbesondere eine Faser, ein Gewebe, ein Gewirk, ein Vlies, einen Filz, ein Geflecht, ein Lederimitat oder Leder, und
(iii) Trocknen des nach Schritt (ii) erhaltenen Produkts bei erhöhter Temperatur.

13. Verfahren nach Anspruch 12, wobei die wässrige Lösung oder wässrige Dispersion im Schritt (i) Wasser und ggf. organisches Lösungsmittel, wie z.B. C₂₋₈-Alkohol, Glykol, Glykolester, Ester, Keton und/oder Polyalkylenglykol enthält und bevorzugt 0,2-2 Gew.-%, bevorzugt 0,2-1,5 Gew.-%, bevorzugt 0,6-1,2 Gew.-% Polymer bezogen auf das Gesamtgewicht der wässrigen Lösung oder wässrigen Dispersion enthält.

14. Verfahren nach Anspruch 12 oder 13, wobei das Aufbringen gemäß Schritt (ii) durch Sprüh-, Foulardier-, Tauch-, Auszieh-, Streich-, Schaum- oder Pflatsch-Verfahren erfolgt.

15. Faser, Textil, Lederimitat oder Leder ausgerüstet mit einem Polymer nach einem der Ansprüche 1-3 oder 8 oder mit einer Zusammensetzung nach einem der Ansprüche 9-10 oder erhältlich durch ein Verfahren gemäß einem der Ansprüche 12-14.
